# EUROPÄISCHE PATENTSCHRIFT

(11) **EP 0 459 310 B1**
(45) Veröffentlichungstag und Bekanntmachung des Hinweises auf die Patenterteilung: **31.01.1996**
(21) Anmeldenummer: 91108405.1
(22) Anmeldetag: 24.05.1991
(51) Int. Cl.: B01D 3/14, C12G 3/12

(54) **Verfahren und Vorrichtung zur Behandlung von Obstbranntweinen**
Process and device for the treatment of fruit spirits
Procédé et appareil pour le traitement de l'eau-de-vie de fruit

(30) Priorität: 25.05.1990 DE 4016842; 29.04.1991 DE 4114018
(43) Veröffentlichungstag der Anmeldung: 04.12.1991
(73) Patentinhaber: FIRMA ARNOLD HOLSTEIN, D-88677 Markdorf (DE)
(72) Erfinder: Arnold, Holstein, W-7778 Markdorf (DE)
(74) Vertreter: Patentanwälte Eisele, Otten & Roth

(56) Entgegenhaltungen:
- EP-A- 0 343 260
- DE-U- 8 906 105
- PATENT ABSTRACTS OF JAPAN, vol. 9, no. 17 (C-262), 24. Januar 1985/
- SCHWEIZERISCHE ZEITSCHRIFT FÜR OBST- UND WEINBAU, Band 123, Nr. 22, 1987, Waedesnwill (CH); E. RITZMANN et al., Seiten 595-597/

## Beschreibung

Die Erfindung betrifft ein Verfahren zur Reduzierung des Cyanidgehalts und damit zur Verminderung der Bildung von Ethylcarbamat in Obstbranntweinen sowie eine Vorrichtung zur Durchführung des Verfahrens nach dem Oberbegriff des Verfahrensanspruch 1 bzw. des Vorrichtungsanspruchs 3.

### Stand der Technik:

Ein entsprechendes Verfahren sowie eine Vorrichtung zur Durchführung des Verfahrens sind aus der europäischen Patentanmeldung Nr. 0 343 260 der Anmelderin bekannt geworden. Die vorliegende Erfindung baut auf den Inhalt dieser Patentanmeldung auf.

In der EP 0 343 260 sind eine Vielzahl von Verfahren sowie Vorrichtungen beschrieben, die sich mit dem Problem der Reduzierung des Cyanidgehalts bzw. der Reduzierung von Ethylcarbamat (EC) in Alkohol-Flüssigkeitsgemischen beschäftigen. Nachdem die Verwendung von kupferförmigen Raschigringen auf den Verstärkerböden selbst nur unbefriedigende Ergebnisse gezeigt haben, wurde gemäß EP 0 343 260 vorgeschlagen, einen Kupferkatalysator zwischen dem obersten Verstärkerboden und dem Dephlegmator anzuordnen. Dieses Verfahren bzw. diese Anordnung hat bereits eine erhebliche Verbesserung bei der Reduzierung der schädlichen Stoffe erbracht. Es sind jedoch stets Bemühungen vorhanden, die so erzielten Werte noch weiter zu verbessern. Im Hinblick darauf, daß ca. 2/3 des aufsteigenden Alkohol-Flüssigkeitsdampfes am Dephlegmator kondensiert und wieder auf den obersten Verstärkerboden zurückfließen, muß der Katalysator optimiert werden. Dieses Zurückfließen geschieht durch den zwischen obersten Verstärkerboden und Dephlegmator angeordneten Kupferkatalysator. Der Kupferkatalysator wird demnach mit 5/3 einer bestimmten Menge pro Zeiteinheit beaufschlagt, d. h. 3/3 der Menge beim dampfförmigen Aufstieg zuzüglich 2/3 durch den Rücklauf. Dies führt doch zu einer erheblichen Belastung der Kupferoberfläche dahingehend, daß diese zum einen stark benetzt ist durch das Rücklaufkondensat und zum andern einen hohen Alkohol-Flüssigkeitsdampfdurchsatz erfährt. Hohe Mengen an Dampf sowie Rücklaufflüssigkeit bewirken auch eine gewisse Verschmutzung der Katalysatoroberfläche, was zur Verringerung des Wirkungsgrades führt.

Aus dem Dokument DE-U-8 906 105 = EP 0 355 773 A2 ist weiterhin eine Katalysatorvorrichtung für Brennereigeräte bekannt geworden, mittels welcher ebenfalls Schadstoffe während der Gewinnung von Branntwein aus Steinobst beseitigt bzw. vermindert werden sollen. Dabei erfolgt die Anordnung eines Katalysators außerhalb der Destillationsapparatur, d. h. außerhalb des Strömungsbereiches der über den Verstärkerkolonnen mit Verstärkerböden aufsteigenden Alkoholdämpfe.

Aufgabe der Erfindung ist es deshalb, ausgehend von der EP-A-0 343 260, eine Verbesserung des Verfahrens und der Vorrichtung zur Reduzierung des Cyanidgehaltes und damit zur Verminderung der Bildung von Ethylcarbamat in Obstbranntweinen zu erzielen.

Diese Aufgabe wird durch die Merkmale der Ansprüche 1 und 3 gelöst. In den Unteransprüchen sind vorteilhafte und zweckmäßige Weiterbildungen des Inhalts der genannten Ansprüche angegeben.

### Vorteile der Erfindung:

Das erfindungsgemäße Verfahren bzw. die zugehörige Vorrichtung zur Durchführung des Verfahrens hat demgegenüber den Vorteil, daß der Katalysator an einer Stelle angeordnet ist, an der er einen wesentlich geringeren Durchsatz sowohl an Alkoholdämpfen bzw. an Flüssigkeitsrücklauf hat. Es hat sich in langwierigen Versuchen gezeigt, daß die durch die kupferförmigen Raschigringe auf den Verstärkerböden selbst sich einstellenden Nachteile einer zu hohen Benetzung der Kupferoberfläche mit Alkoholflüssigkeit auch zum Teil dann vorliegt, wenn der Rücklauf aus dem Dephlegmator zu hoch eingestellt ist. Kühlt man den Dephlegmator weniger stark, so ist der Alkoholrücklauf an Kondensat weniger stark ausgeprägt, was jedoch zu einer Verringerung der Alkoholkonzentration im fortgeführten Alkoholdampf führt. Eine geringere Belastung des Katalysators mit einer Flüssigkeitsoberfläche aufgrund des Rücklaufes führt zu einer Verbesserung der Reduzierung des Cyanidgehalts und des EC-Gehalts. Erfindungsgemäß hat es sich deshalb bewährt, den Katalysator selbst oder einen zusätzlichen Katalysator oberhalb des Dephlegmators anzuordnen. Dabei muß der Katalysator lediglich noch 1/3 der vom obersten Verstärkerboden aufsteigenden Dämpfe verarbeiten, was zu einer wesentlich erhöhten Kontaktierung des Alkohol-Dampfgemisches mit dem Kupferkatalysator führt. Ist man bei den in der Flüssigkeit liegenden Raschigringen davon ausgegangen, daß eine hohe Benetzung der Kupferoberfläche für den Stoffaustausch zur Reduzierung der Schadstoffe erforderlich ist, so zeigt die Erkenntnis der vorliegenden Erfindung, daß dies keinesfalls in dem bisher geglaubten Maße erforderlich ist. Vielmehr genügt eine sehr geringe Benetzung der Katalysatoroberfläche, um einen ausreichend guten Stoffaustausch bei der Berührung der aufsteigenden Alkoholdämpfe mit der benetzten Katalysatoroberfläche zu erzielen. Diese geringe Benetzung kann bereits durch den restlichen Wasseranteil im Alkohol-Flüssigkeitsgemisch erzielt werden.

Die Erfindung geht deshalb von der Erkenntnis aus, den Kupferkatalysator als Mittel zur Reduzierung der Schadstoffanteile dahin anzuordnen, wo eine möglichst umfassende Kontaktaufnahme zwischen Alkohol-Flüssigkeitsdampf und Kupferoberfläche erfolgen kann, die nicht von einer zu starken Benetzung gestört wird. Deshalb soll die Katalysatoroberfläche kaum bzw. nur geringfügig mit einer Flüssigkeitsschicht benetzt sein.

Gemäß der Weiterbildung der Erfindung kann ein zusätzlicher Katalysator entsprechend der EP 0 343 260 unterhalb des Dephlegmators und ein weiterer überhalb des Dephlegmators angeordnet sein.

In besonderer Ausbildung der Erfindung wird der obere und/oder der untere Katalysator mit einer im Durchlaß variablen Durchlaßbohrung versehen, um den Einsatz und damit die Wirkung des Katalysators je nach zu behandelndem Stoff flexibel zu gestalten.

Ein Ausführungsbeispiel der Erfindung ist in der Zeichnung dargestellt und in der nachfolgenden Beschreibung näher erläutert. Es zeigen
- Fig. 1: eine schematische Darstellung des Destillationsapparates mit oberem Katalysator,
- Fig. 2: eine Variante mit zusätzlichem bekanntem Katalysator und
- Fig. 3: einen Schnitt durch eine Katalysatorfläche.

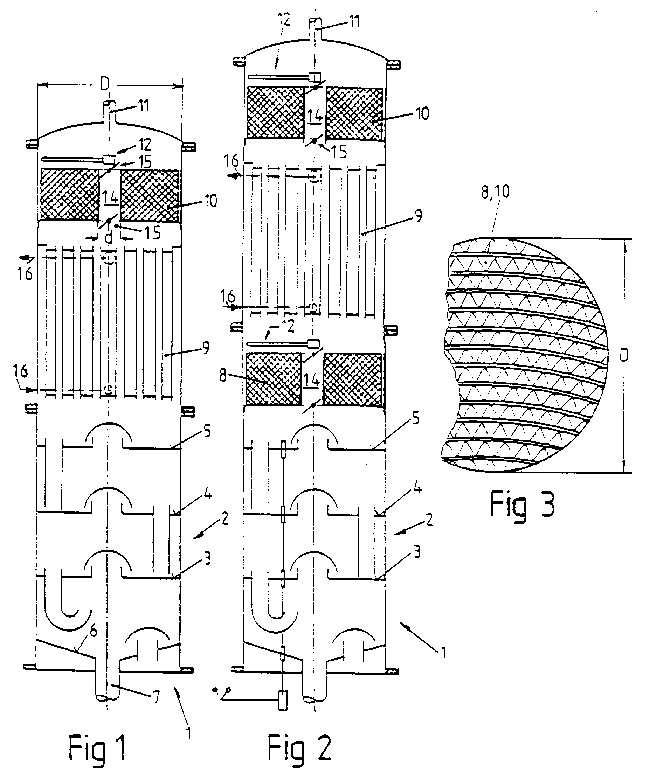

Die in den Figuren 1 und 2 dargestellte Destillationsapparatur 1 ist in ihrem prinzipiellen Aufbau zunächst gleich aufgebaut wie die in der EP 0 343 260. Auf die entsprechende Beschreibung wird verwiesen.

In einer nicht näher dargestellten beheizten Brennblase wird eingelagerte Maische zur Durchführung des Destillationsvorganges erhitzt. Oberhalb der Brennblase befindet sich eine Verstärkerkolonne 2, bestehend aus drei Verstärkerböden bzw. Glockenböden 3 bis 5. Zwischen dem untersten Verstärkerboden 3 und der nicht näher dargestellten Brennblase ist ein Prallblech 6 als Überkochvorrichtung angeordnet. Ein eventueller Rücklauf aus dem untersten Verstärkerboden 3 erfolgt über das Prallblech 6 und ein Rücklaufrohr 7 in die Maische.

Die Verstärkerböden 3 bis 5 sind in an sich bekannter Weise als Rektifikationskolonne ausgebildet. Oberhalb der Verstärkerböden 3 bis 5 befindet sich im Ausführungsbeispiel nach Fig. 2 ein Katalysator 8, wie er prinzipiell in der EP 0 343 260 näher beschrieben ist. In Durchflußrichtung der Destillationsapparatur folgt nach dem obersten Verstärkerboden 5 in Fig. 1 bzw. nach dem Katalysator 8 in Fig. 2 ein Dephlegmator 9 mit Kühleinrichtung 16 mit Wasserdurchlauf. Bei einer Gegenstromdestillation gemäß der vorliegenden Erfindung bewirken Verstärkerböden und Dephlegmator, daß dem von unten nach oben aufsteigenden Dampf stets ein Flüssigkeitsstrom entgegengeführt wird, so daß es zu einer innigen Berührung von Dampf und Flüssigkeit und damit zu einem gegenseitigen Wärme- und Stoffaustausch kommt. Dabei wird ein beim Durchgang durch die Destillationsapparatur kondensierender Dampf nicht voll als Destillat abgenommen, sondern vielmehr ein Teil des Kondensats stets wieder in die flüssige Form zurückgeführt, so daß ein mehrfaches Aufkochen und damit Destillieren erfolgt.

Bei der nach Fig. 2 dargestellten Ausführungsform wird ein vom obersten Verstärkerboden 5 aufsteigende Alkoholdampf durch den Katalysator 8 geleitet, der aus einer Vielzahl von Kupferrohren bzw. Kupferlamellen zur Bildung einer großen Oberfläche besteht. Dabei wird dieser Katalysator 8 vom rücklaufenden Phlegma des darüberliegenden Dephlegmators 9 je nach Kühlung 16 des Dephlegmators gleichmäßig benetzt. Die Benetzung liegt dabei bei ca. 2/3 der aufsteigenden Dampfmenge, d. h. 2/3 des in den Dephlegmator gelangenden Alkoholdampfs wird als Kondensator zurückgeschickt und durchläuft den ggf. vorhandenen unteren Katalysator 8.

Erfindungsgemäß ist in Fig. 1 und 2 unmittelbar oberhalb des Dephlegmators 9 ein Katalysator 10 vorgesehen, der prinzipiell gleich aufgebaut sein kann, wie der Katalysator 8 unterhalb des Dephlegmators 9 beim Ausführungsbeispiel nach Fig. 2. Dieser Kupferkatalysator muß lediglich noch den restlichen Alkoholdampf verarbeiten, der den Dephlegmator 9 passiert und nach oben durch das Geistrohr 11 abgeführt wird. Da diese Alkoholmenge nur ca. 1/3 der von den Verstärkerböden aufsteigenden Dampfmenge beträgt - 2/3 wird im Dephlegmator zurückgeführt - wird einer geringeren Dampfmenge eine wesentlich erhöhte Kupferoberfläche pro aufsteigender Alkoholdampfmenge zur Verfügung gestellt, was zu einer erheblichen Verbesserung der Reduzierung des Cyanidgehalts bzw. des Fthylcarbamat-Gehalts im Destillat führt.

Der Katalysator 10 ist unittelbar oberhalb des Dephlegmators 9, d. h. noch innerhalb der Destillationsapparatur angeordnet. Dabei erstreckt sich sein Querschnitt über den gesamten Strömungsquerschnitt der aufsteigenden Alkoholdämpfe. Erst hierdurch kann eine vollständige Berührung der Dämpfe mit der Katalysatoroberfläche 10 erfolgen. Hierbei spielt die Struktur des Katalysators 10 - wie im Schnitt in Fig. 3 dargestellt - eine wichtige Rolle. Um keine Strömungsverluste durch einen Druckabfall im Katalysator 10 zu bekommen, sind die Lamellen im Katalysator 10 derart ausgebildet, daß die axiale Durchströmung der Dämpfe völlig ohne Druckabfall erfolgen kann, d. h. der Katalysator 10 weist in seiner axialen Längsrichtung keinerlei Schikanen, Vorsprünge oder sonstige Umlenkungen auf, die einen Druckverlust erzeugen könnten. Der Katalysator 10 wird demnach "sanft" durchströmt ohne daß ein bemerkenswerter Rückfluß an Kondensat eintritt. Hierdurch findte eine entscheidende Verbesserung der Reduzierung des Cyanidgehalts statt.

Je nach Anwendungsfall wird deshalb die erfindungsgemäße Vorrichtung nach dem erfindungsgemäßen Verfahren entweder mit einem unterhalb des Dephlegmators 9 angeordneten zusätzlichen Katalysator 8 (Fig. 2) oder lediglich mit einem darüber angeordneten Katalysator 10 (Fig. 1) gefahren. Wird nur ein geringer Rückfluß des Phlegmas aufgrund der Kühlung des Dephlegmators 9 eingestellt, so kann es ggf. ausreichen, die Anlage nur mit dem oberen Katalysator 10 zu betreiben. Im übrigen verbessern sich die Werte, wenn man beide Katalysatoren 8 und 10 verwendet.

Zur Reinigung der Katalysatoren 8, 10 ist oberhalb derselben eine Reinigungsvorrichtung 12 vorgesehen, die die Reinigung aufgrund der Anordnung des Katalysators innerhalb der Destillationsvorrichtung sehr erleichtert. Dies gilt auch im Hinblick auf den axial ungehinderten Durchgang durch den Katalysator.

Sowohl bei der Ausführungsform nach Fig. 1 oder nach Fig. 2 können die Katalysatoren mit einer z. B. zentralen, verschließbaren Durchgangsbohrung 14 versehen sein. Bei einem Katalysator-Außendurchmesser von ca. D ∼ 400 - 450 mm beträgt der Bohrungsdurchmesser d ∼ 100 mm. Je nach zu behandelndem Stoff kann die Durchgangsbohrung 14 mittels einer oder mehrerer ggf. regelbarer Schwenkklappen 15 geöffnet oder verschlossen werden. Die Öffnung bewirkt einen ungehinderten Durchgang des aufsteigenden Alkoholdampfs, d. h. einer Verminderung der Katalysatorwirkung. Dies kann insbesondere bei solchen Stoffen durchgeführt werden, bei denen der EC-Gehalt weniger problematisch ist.

## Patentansprüche

1. Verfahren zur Reduzierung des Cyanidgehaltes und damit zur Verminderung der Bildung von Ethylcarbamat (EC) in Obstbranntweinen, wobei die Maische in einer Brennblase erhitzt wird und die aufsteigenden Alkoholdämpfe einer Verstärkerkolonne (2) mit Verstärkerböden (3 - 5) und einem Dephlegmator (9) mit Kühleinrichtung (16) und zur Bindung der Cyanidbestandteile wenigstens einem Kupferkatalysator (8, 10) zuführgeführt werden, dadurch gekennzeichnet, daß die Alkoholdämpfe einem Kupferkatalysator (10) mit großer Kupferoberfläche zugeführt werden und diesen ohne axiale Richtungsänderung und ohne Druckabfall durchströmen, wobei sich der Katalysator (10) in Strömungsrichtung der Alkoholdämpfe oberhalb des Dephlegmators (9) innerhalb der Destillationsapparatur befindet und sich über den gesamten Strömungsquerschnitt D der Apparatur (1) erstreckt.

2. Verfahren nach Anspruch 1, dadurch gekennzeichnet, daß die Alkoholdämpfe vom obersten Verstärkerboden (5) zunächst einem vom rücklaufenden Phlegma des darüberliegenden Dephlegmators (9) benetzten ersten Katalysator (8) und nach dem Durchströmen des Dephlegmators (9) einem darüberliegenden zweiten Katalysator (10) zuführbar sind, wobei der Rücklauf durch einen Dephlegmator (9) ca. 2/3 der Gesamtmenge der aufsteigenden Alkoholdämpfe umfaßt.

3. Vorrichtung zur Durchführung des Verfahrens nach Anspruch 1 und insbesondere zur Reduzierung von Ethylcarbamat in Steinobstbranntweinen, bestehend aus einer Brennblase mit nachgeschalteter Verstärkerkolonne (2), Dephlegmator (9) mit Kühlvorrichtung (16) und mit wenigstens einem Kupferkatalysator (8, 10), dadurch gekennzeichnet, daß ein Kupferkatalysator (10) mit sich über den gesamten Strömungsquerschnitt (D) erstreckender großer Kupferoberfläche räumlich oberhalb bzw. über dem Dephlegmator (9) innerhalb der Destillationsapparatur (1) angeordnet ist und in seiner axialen Längsrichtung keinerlei Schikanen, Vorsprünge oder sonstige Umlenkeinrichtungen aufweist.

4. Vorrichtung nach Anspruch 3, dadurch gekennzeichnet, daß zusätzlich zum oberhalb des Dephlegmators (9) angeordneten Kupferkatalysators (10) ein weiterer Katalysator (8) zwischen dem obersten Verstärkerboden (5) und dem Dephlegmator (9) angeordnet ist.

5. Vorrichtung nach Anspruch 3 oder 4, dadurch gekennzeichnet, daß die wirksame Kupferoberfläche des Katalysators (8, 10) ca. 10 m² aufweist, bei einem Außendurchmesser D ≅ 400 mm.

6. Vorrichtung nach Anspruch 3 oder 4, dadurch gekennzeichnet, daß der Katalysator (8, 10) aus einem Rohrbündel oder aus Lamellenrohren ausgebildet ist oder aus zickzackförmig, in Lagen gelegte Lamellenblechen (13) besteht.

7. Vorrichtung nach Anspruch 3 oder 4, dadurch gekennzeichnet, daß die Reinigung des Katalysators (8, 10) mittels einer oberhalb und/oder unterhalb des Katalysators angeordneten rotierenden Hochdruckdüse (12) erfolgt, die den gesamten Innenquerschnitt (D) der Destillationsapparatur (1) erfaßt.

8. Vorrichtung nach Anspruch 3 oder 4 dadurch gekennzeichnet, daß der Katalysator (10, 8) vorzugsweise in seinem mittleren Bereich eine verschließbare, ggf. im Querschnitt regelbare Durchlaßbohrung (14) für einen ungehinderten Durchtritt der aufsteigenden Alkoholdämpfe aufweist, wobei vorzugsweise eine regelbare Schwenkklappe (15) vorgesehen ist.

## Claims

1. Process for reducing the cyanide content and thereby reducing the formation of ethyl carbamate (EC) in fruit spirits, whereby the must is heated in a distillation boiler and the rising alcohol vapours are fed into a fortification column (2) with fortification bases (3 - 5), a dephlegmator (9) with a cooling device (16) and for binding the cyanide components at least one copper catalyzer (8, 10), characterised in that the alcohol vapours are fed into a copper catalyzer (10) with a large copper surface and flow through the latter without changing direction axially and without a drop in pressure, whereby the catalyzer (10) is located inside the distillation apparatus in the direction of flow of the alcohol vapours above the dephlegmator (9) and extends across the entire flow cross section D of the apparatus (1).

2. Process according to Claim 1, characterised in that the alcohol vapours can be fed from the uppermost fortification base (5) firstly into a first catalyzer (8) perfused by the returning phlegm of the above dephlegmator (9) and after flowing through the dephlegmator (9) can be fed into a second catalyzer (10) thereabove, whereby the reflux through a dephlegmator (9) comprises approximately 2/3 of the total amount of rising alcohol vapours.

3. Device for performing the process according to Claim 1 and in particular for reducing the ethyl carbamate in stone fruit spirits, comprising a distillation boiler with a connected fortifying column (2), dephlegmator (9) with cooling device (16) and with at least one copper catalyzer (8, 10), characterised in that a copper catalyzer (10) with a large copper surface extending over the entire flow cross-section (D) is arranged above or over the dephlegmator (9) inside the distillation apparatus (1) and in its axial longitudinal direction comprises no flow spoilers, projections or other diverting devices.

4. Device according to Claim 3, characterised in that in addition to the copper catalyzer (10) arranged above the dephlegmator (9) an additional catalyzer (8) is arranged between the uppermost fortifying base (5) and the dephlegmator (9).

5. Device according to Claim 3 or 4, characterised in that the effective copper surface of the catalyzer (8, 10) is approximately 10 m² with an outer diameter D ≅ 400 mm.

6. Device according to Claim 3 or 4, characterised in that the catalyzer (8, 10) is constructed from a tube bundle or lamella tubes or comprises zigzag shaped layered lamella sheets (13).

7. Device according to Claim 3 or 4, characterised in that the cleaning of the catalyzer (8, 10) is performed by means of a rotating high pressure nozzle (12) arranged above and/or below the catalyzer which covers the whole inner cross-section (D) of the distillation apparatus (1).

8. Device according to Claim 3 or 4, characterised in that the catalyzer (10, 8) preferably in its middle region comprises a closeable through bore (14), optionally adjustable in cross-section for the unrestricted passage of the rising alcohol vapours, whereby preferably a controllable pivot flap (15) is provided.

## Revendications

1. Procédé pour réduire la teneur en cyanure et, ainsi, diminuer la formation d'éthylcarbamate (EC) dans des eaux-de-vie de fruits, le moût étant chauffé dans une cuve et les vapeurs d'alcool ascendantes étant amenées à une colonne de distillation (2) ayant des plateaux (3-5) et à un déflegmateur (9) à dispositif de refroidissement (16) et, pour lier les constituants de cyanure, à au moins un catalyseur de cuivre (8,10),
caractérisé en ce que les vapeurs d'alcool sont amenées à un catalyseur de cuivre (10) ayant une grande surface de cuivre et traversent celui-ci sans modification de direction axiale et sans chute de pression, le catalyseur (10) se trouvant, dans le sens d'écoulement des vapeurs d'alcool, au-dessus du déflegmateur (9) à l'intérieur de l'appareil de distillation et s'étendant sur toute la section transversale d'écoulement (D) de l'appareil (1).

2. Procédé selon la revendication 1,
caractérisé en ce que les vapeurs d'alcool peuvent être amenées du plus haut plateau de distillation (5) tout d'abord à un premier catalyseur (8) mouillé par le flegme s'écoulant du déflegmateur (9) sus-jacent et, après la traversée du déflegmateur (9), à un second catalyseur sus-jacent (10), le retour à travers un déflegmateur (9) concernant environ 2/3 de la quantité totale des vapeurs d'alcool ascendantes.

3. Dispositif pour mettre en oeuvre le procédé selon la revendication 1 et, en particulier, pour réduire la teneur en éthylcarbamate dans des eaux-de-vie de fruits à noyaux, comportant une cuve avec, en aval, une colonne de distillation (2), un déflegmateur (9) avec un dispositif de refroidissement (16) et au moins un catalyseur de cuivre (8,10),
caractérisé en ce qu'un catalyseur de cuivre (10) ayant une grande surface de cuivre s'étendant sur toute la section transversale d'écoulement (D) est agencé spatialement au-dessus ou sur le déflegmateur (9) à l'intérieur de l'appareil de distillation (1) et ne présente, dans sa direction longitudinale axiale, aucune chicane ou saillie ou dispositif quelconque de renvoi.

4. Dispositif selon la revendication 3,
caractérisé en ce que, en plus du catalyseur de cuivre (10) agencé au-dessus du déflegmateur (9), il est agencé un autre catalyseur (8) entre le plateau de distillation le plus haut (5) et le déflegmateur (9).

5. Dispositif selon la revendication 3 ou 4,
caractérisé en ce que la surface de cuivre active du catalyseur (8, 10) vaut environ 10 m², pour un diamètre externe D ≃ 400 mm.

6. Dispositif selon la revendication 3 ou 4,
caractérisé en ce que le catalyseur (8, 10) est réalisé à partir d'un faisceau de tubes ou de tubes à lamelles, ou est constitué de tôles à lamelles (13) disposées en couches en forme de zigzag.

7. Dispositif selon la revendication 3 ou 4,
caractérisé en ce que la purification du catalyseur (8, 10) est effectuée au moyen d'une buse à haute pression (12) rotative agencée au-dessus et/ou au-dessous du catalyseur, laquelle englobe toute la section transversale interne (D) de l'appareil de distillation (1)

8. Dispositif selon la revendication 3 ou 4,
caractérisé en ce que le catalyseur (10, 8) présente avantageusement, dans sa zone médiane, un perçage de passage (14) pouvant être fermé et, le cas échéant, de section transversale réglable, pour un passage sans entraves des vapeurs d'alcool ascendantes, un clapet pivotant réglable (15) étant avantageusement prévu.
